# EUROPEAN PATENT APPLICATION

(11) **EP 4 806 685 A1**
(43) Date of publication of application: **16.09.2026**
(21) Application number: 26162725.1
(22) Date of filing: 05.03.2026
(51) Int. Cl.: B60K 1/04, B62D 25/20, B60R 5/04, B60R 13/01

(54) **VEHICLE REAR PORTION STRUCTURE**

(30) Priority: 11.03.2025 JP 2025038185
(71) Applicant: Suzuki Motor Corporation, Hamamatsu-shi, Shizuoka 432-8611 (JP)
(72) Inventor: IMAI, Yusuke, HAMAMATSU-SHI, 432-8611 (JP)
(74) Representative: Plasseraud IP

(57) **Abstract**

Provided is a vehicle rear portion structure with which the rigidity of a luggage compartment can be improved.

[Means to Solve the Problems]A vehicle rear portion structure (100) includes: a rear floor (102) of a vehicle; a main battery frame (112) disposed above the rear floor (102) and holding a main battery (110) that supplies power to a power unit of the vehicle; a luggage board (106) that covers the main battery frame (112) from above and forms a floor of a luggage compartment of the vehicle; and a subframe (160) extending between an end portion of an upper portion of the main battery frame (112) in a vehicle width direction and a sidewall (162) on the end portion side in the vehicle. The luggage board (106) includes a fixed portion (126) placed on and fixed to the main battery frame (112) and the subframe (160).

## Description

### [Field of the Invention]

The present invention relates to a vehicle rear portion structure.

### [Background of the Invention]

A rear floor of a vehicle is often equipped with a battery that supplies power to a power unit such as a motor. For example, FIG. 2 of Patent Document 1 discloses an arrangement where a vehicle drive battery 6 is mounted on the floor panel 8, behind a rear seat 4.

### [Prior Art Documents]

### [Patent Documents]

[Patent Document 1] JP 5929696B

### [Summary of the Invention]

### [Problems to be Solved by the Invention]

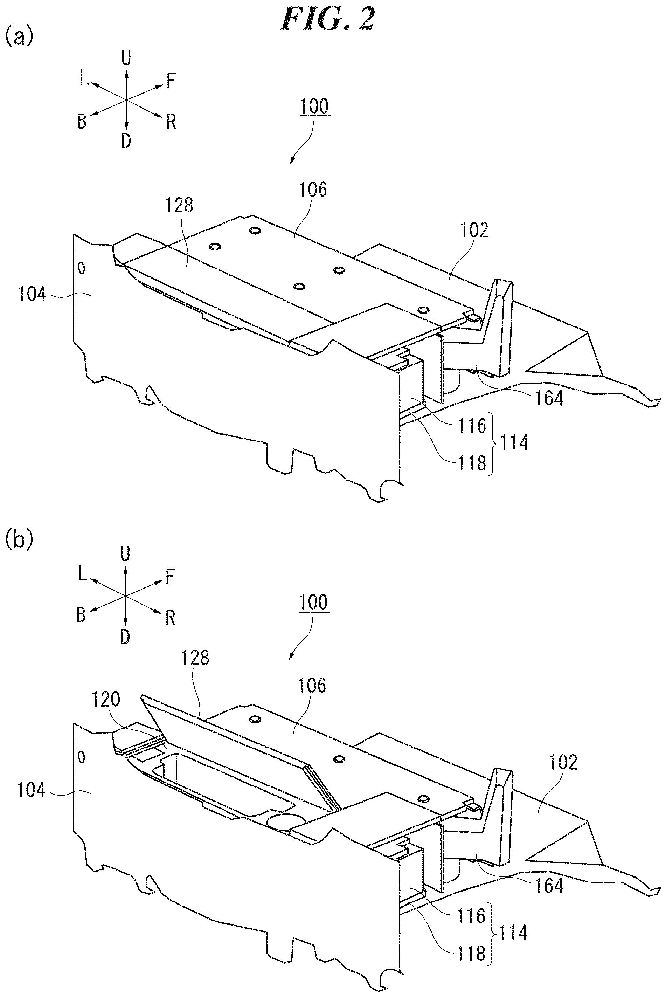

In the technique of Patent Document 1, a luggage compartment 2 is formed behind a battery accommodation space 5. A floor surface of the luggage compartment 2 is formed by a floorboard 27, which is a component different from the floor panel 8. However, in FIG. 2, it can be confirmed that a space is formed between the floor panel 8 and the floorboard 27. It is desirable that the rigidity of the floorboard 27 serving as a floor material can be ensured such that luggage can be suitably placed thereon.

In view of the above problems, an object of the present invention is to provide a vehicle rear portion structure with which the rigidity of a floor of a luggage compartment can be improved.

### [Means to Solve the Problems]

In order to solve the above problem, a representative configuration of a vehicle rear portion structure according to the present invention is a vehicle rear portion structure including: a rear floor of a vehicle; a main battery frame disposed above the rear floor and holding a main battery that supplies power to a power unit of the vehicle; a luggage board that covers the main battery frame from above and forms a floor of a luggage compartment of the vehicle; and a subframe extending between an end portion of an upper portion of the main battery frame in a vehicle width direction and a sidewall on the end portion side in the vehicle, wherein the luggage board includes a fixed portion placed on and fixed to the main battery frame and the subframe.

### [Effect of the Invention]

According to the present invention, it is possible to provide a vehicle rear portion structure with which the rigidity of a floor of a luggage compartment can be improved.

### [Brief Explanation of the Drawings]

FIG. 1 is a diagram showing a vehicle rear portion structure according to an example of the present invention.
FIG. 2 is a diagram showing the vehicle rear portion structure in FIG. 1(a) as seen from a different direction.
FIG. 3 is a diagram showing the vehicle rear portion structure in FIG. 2(a) as seen from above.
FIG. 4 is a diagram showing a state where opening/closing portions of the luggage board in FIG. 3(a) are open.
FIG. 5 is a cross-sectional view of the vehicle rear portion structure in FIG. 3(a).
FIG. 6 is a diagram showing a subframe in FIG. 3(b).
FIG. 7 is a perspective view showing a bracket in FIG. 6(b) as seen from the front left upper side.
FIG. 8 is a diagram showing the bracket in FIG. 7 as seen from above.
FIG. 9 is a diagram showing a second opening/closing portion in FIG. 4(a).

### [Embodiments of the Invention]

A vehicle rear portion structure according to an example of the present invention is a vehicle rear portion structure including: a rear floor of a vehicle; a main battery frame disposed above the rear floor and holding a main battery that supplies power to a power unit of the vehicle; a luggage board that covers the main battery frame from above and forms a floor of a luggage compartment of the vehicle; and a subframe extending between an end portion of an upper portion of the main battery frame in a vehicle width direction and a sidewall on the end portion side in the vehicle, wherein the luggage board includes a fixed portion placed on and fixed to the main battery frame and the subframe.

According to the above configuration, it is possible to support the luggage board with a high rigidity by the main battery frame and the subframe. And thus, according to the above configuration, it is possible to improve the rigidity of a floor of a luggage compartment and provide a luggage compartment on which luggage can be stably loaded.

The vehicle rear portion structure may also further include a bracket protruding from the sidewall and joined to the subframe.

With the above-described bracket, it is easy to change the plate thickness and shape, thus making it possible to efficiently improve the support rigidity of the subframe as compared with the case where the subframe is directly joined to the sidewall. In addition, since the position and shape of the bracket can be changed in accordance with the surrounding structure, it is possible to facilitate attaching the subframe, for example, to the vehicle.

A configuration is also possible in which the bracket includes: a base bracket joined to the sidewall; and a support bracket protruding from the base bracket toward the subframe, and the base bracket includes: one or a plurality of leg portions joined to the sidewall; and a pedestal portion to which the support bracket is joined in a state of being spaced apart from the sidewall.

With the above-described base bracket and the support bracket, it is easy to change the plate thickness and its shape, thus making it possible to efficiently improve the support rigidity of the subframe. In addition, since the pedestal portion of the base bracket is spaced apart from the sidewall, the support bracket can be joined to the pedestal portion more easily, thus making it easy to perform a countermeasure for preventing rotation of the support bracket, for example.

The vehicle rear portion structure may also further include an auxiliary battery disposed on an upper side of the rear floor at a position adjacent to the main battery frame and the subframe when viewed from above, and the luggage board may also further include: an openable and closable opening/closing portion provided in a region covering an upper side of the auxiliary battery; and a fitting portion provided at an end portion of the opening/closing portion and fitted between the fixed portion and the subframe in an attachable and detachable manner.

With the above-described luggage board, it is possible to perform work on the auxiliary battery simply by opening the opening/closing portion without unloading luggage to the outside of the vehicle or removing the entire luggage board. Further, the fitting portion of the opening/closing portion is fitted between the fixed portion and the subframe, thus making it possible to improve the support rigidity of the opening/closing portion and prevent the displacement thereof.

The vehicle rear portion structure may also further include: a toolbox disposed above the rear floor and behind the main battery and the auxiliary battery, the toolbox being configured to store a predetermined item, and the opening/closing portion may also be placed on a portion of the toolbox while covering the upper side of the auxiliary battery.

According to the above-described luggage board, the toolbox can be used and work on the auxiliary battery can be performed simply by opening the opening/closing portion. In addition, the support rigidity of the opening/closing portion can be improved by using the toolbox.

A configuration is also possible in which the luggage board further includes: another opening/closing portion provided adjacent to the opening/closing portion and covering an upper side of the toolbox in an openable and closable manner; and a hinge portion that connects a front end of the other opening/closing portion and the fixed portion.

According to the above configuration, the other opening/closing portion can be opened and closed using the hinge portion. The toolbox can be used simply by opening the other opening/closing portion of the luggage board.

### Example

A preferable example of the present invention will be described in detail below with reference to the attached drawings. Dimensions, materials, other specific values, and the like described in this example are merely examples for facilitating understanding of the invention, and are not intended to limit the present invention unless stated otherwise. Note that in the present specification and drawings, elements having substantially the same functions and configurations are assigned the same reference numerals and redundant descriptions are omitted. Elements that are not directly related to the present invention are omitted in the drawings.

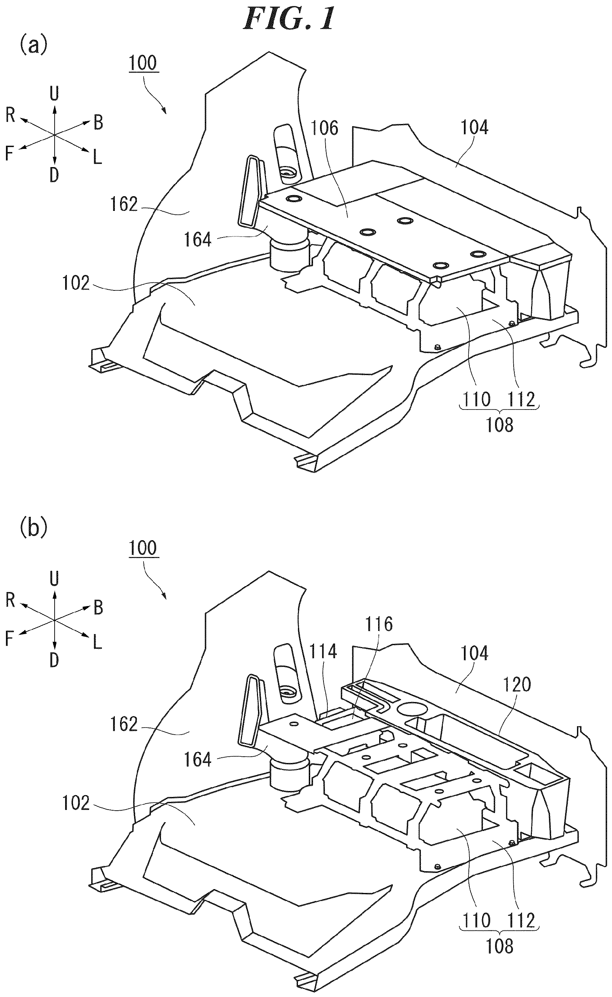

FIG. 1 is diagram showing a vehicle rear portion structure 100 according to an example of the present invention. FIG. 1(a) is a perspective view of the vehicle rear portion structure 100 as seen from the front left upper side.

Hereinafter, in FIG. 1 and all of the other drawings of the present application, the arrows F (Forward) and B (Backward) indicate the front and rear directions of the vehicle, the arrows L (Leftward) and R (Rightward) indicate the left and right directions in the width direction of the vehicle, and the arrows U (Upward) and D (Downward) indicate the up and down directions of the vehicle.

The vehicle rear portion structure 100 includes a rear floor 102, a rear member 104, and a luggage board 106. The rear floor 102 is a panel member that forms the floor of the vehicle rear portion. The rear member 104 is a general term for members connected to the rear end of the rear floor 102, and includes, for example, a back panel or a tail end member.

The luggage board 106 is a member that forms the floor of the luggage component. The luggage board 106 covers a region above a battery structure, such as a main battery assembly 108, and a toolbox 120, thereby making it possible to use a space in front of the rear member 104 as a luggage compartment.

FIG. 1(b) shows the vehicle rear portion structure 100 in FIG. 1(a) with the luggage board 106 removed.

The vehicle rear portion structure 100 has a battery structure including the main battery assembly 108 and an auxiliary battery assembly 114 above the rear floor 102.

The main battery assembly 108 is a structure including a main battery 110 and a main battery frame 112. The main battery 110 is a large, high-voltage battery that supplies power to a power unit serving as a power source of the vehicle. The main battery assembly 108 is disposed on a region above the rear floor 102 that includes the center thereof in the vehicle width direction.

The main battery frame 112 is a member that encloses the main battery 110 and is fixed to the rear floor 102 by means such as bolting.

The auxiliary battery assembly 114 is a structure including an auxiliary battery 116 and an auxiliary battery tray 118 (see FIG. 2(a)). The auxiliary battery 116 is a battery that is smaller in size and lower in voltage than the main battery 110, and supplies power to electric components such as wipers and lights. The auxiliary battery assembly 114 is disposed above the rear floor 102, behind the right side of the main battery assembly 108 in the vehicle width direction.

The vehicle rear portion structure 100 includes the toolbox 120 as a storage component. The toolbox 120 is disposed in a region above the rear floor 102 that is behind the main battery assembly 108 and the auxiliary battery assembly 114. The toolbox 120 can be used as a storage location for various tools.

FIG. 2 is a diagram showing the vehicle rear portion structure 100 in FIG. 1(a) as seen from a different direction. FIG. 2(a) is a perspective view of the vehicle rear portion structure 100 shown in FIG. 1(a) as seen from the rear upper right side.

The luggage compartment formed by the luggage board 106 allows for loading and unloading of luggage through a rear door opening above the rear member 104.

FIG. 2(b) is a diagram showing the luggage board 106 of FIG. 2(a) with the first opening/closing portion open. The luggage board 106 has a plurality of opening/closing portions, such as a first opening/closing portion 128.

The first opening/closing portion 128 is formed in a region, of the luggage board 106, that is above the toolbox 120. The first opening/closing portion 128 allows the region above the toolbox 120 to be usually used as the luggage compartment, while enabling items stored in the toolbox 120 to be retrieved as needed.

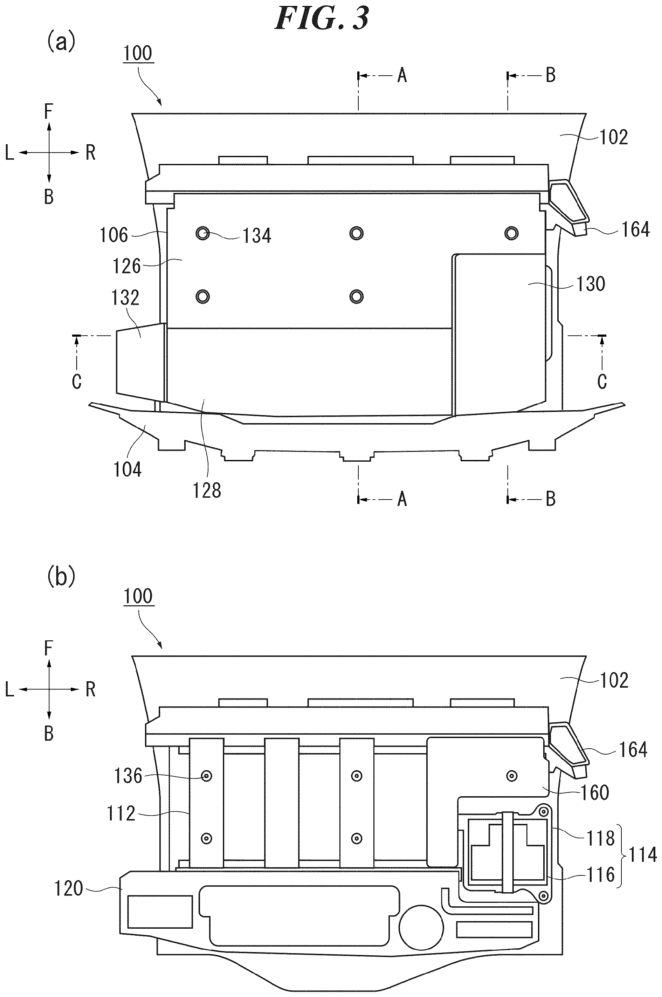

FIG. 3 is a diagram showing the vehicle rear portion structure 100 in FIG. 2(a) as seen from above. FIG. 3(a) is diagram of the vehicle rear portion structure 100 in the state shown in FIG. 2(a) as viewed from above.

The luggage board 106 is divided into a fixed portion 126 and the opening/closing portions. The fixed portion 126 is a portion provided in a range covering a region above the main battery assembly 108 (see FIG. 1(b)). The fixed portion 126 is fastened to the main battery frame 112 (see FIG. 3(b)) and a subframe 160 by a plurality of clips 134. Accordingly, the fixed portion 126 forms the floor of the luggage compartment in a state in which it is fixed to the vehicle.

The plurality of opening/closing portions include the first opening/closing portion 128, a second opening/closing portion 130, and a third opening/closing portion 132. These opening/closing portions form the floor of the luggage compartment in such a way that they can be opened and closed.

The first opening/closing portion 128 is adjacent to the rear side of the fixed portion 126. The second opening/closing portion 130 is adjacent to the right side of the first opening/closing portion 128 in the vehicle width direction. The third opening/closing portion 132 is provided on the side opposite to the second opening/closing portion 130 in the vehicle width direction and adjacent to the left side of the first opening/closing portion 128 in the vehicle width direction.

The third opening/closing portion 132 protrudes to the left in the vehicle width direction relative to the fixed portion 126. The third opening/closing portion 132 and a left end portion of the toolbox 120 that is below the third opening/closing portion 132 may be disposed in a region between the rear member 104 and a rear wheelhouse (not shown).

FIG. 3(b) is a diagram showing a state in which the luggage board 106 and the rear member 104 are removed from the vehicle rear portion structure 100 in FIG. 3(a).

In the auxiliary battery assembly 114, the auxiliary battery 116 is placed on the auxiliary battery tray 118 and fixed by a holder member or other means. The auxiliary battery tray 118 is fixed to the rear floor 102 by bolting or other means.

The fixed portion 126 (see FIG. 3(a)) is mounted on the upper side of the main battery frame 112 and the subframe 160. A plurality of attachment holes 136 for attaching the fixed portion 126 of the luggage board 106 are provided on the upper portions of the main battery frame 112 and the subframe 160.

The first opening/closing portion 128 (see FIG. 3(a)) is provided in a region covering the upper side of the central portion of the toolbox 120. The second opening/closing portion 130 is provided in a region covering the upper side of the auxiliary battery assembly 114 and the upper side of the right edge portion of the toolbox 120. The third opening/closing portion 132 is provided in a region covering the upper side of the left end portion of the toolbox 120.

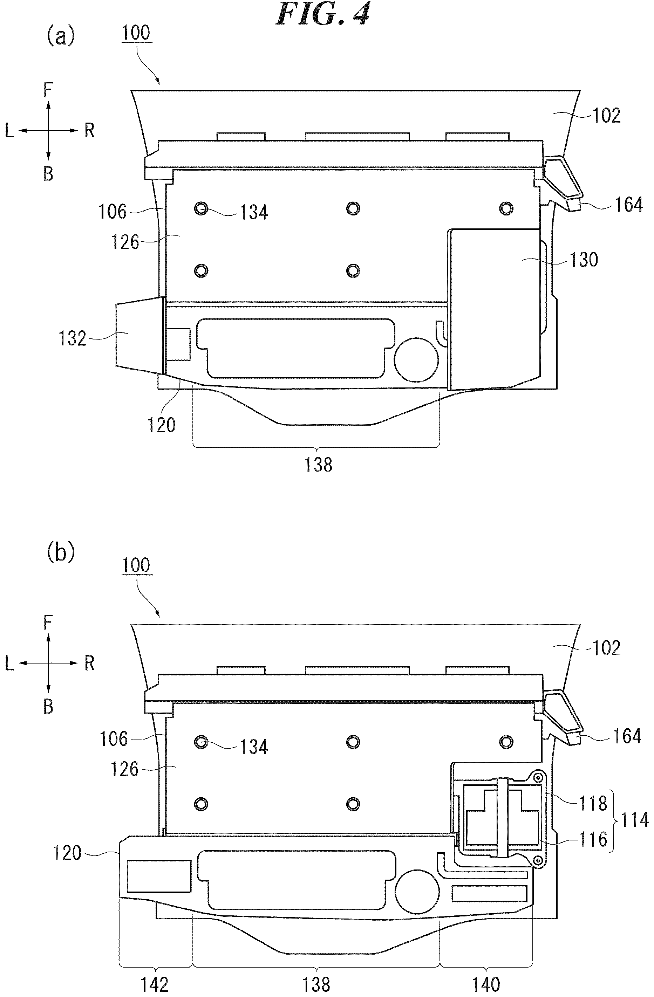

FIG. 4 shows the luggage board 106 in FIG. 3(a) with the opening/closing portions open. FIG. 4(a) is a diagram showing the first opening/closing portion 128 in FIG. 3(a) in the open state.

Opening the first opening/closing portion 128 (see FIG. 3(a)) enables use of a central storage portion 138 of the toolbox 120. The central storage portion 138 can store tools such as a flat tire repair kit.

FIG. 4(b) shows the second opening/closing portion 130 and the third opening/closing portion 132 of FIG. 4(a) in the open state.

Opening the second opening/closing portion 130 (see FIG. 4(a)) exposes the auxiliary battery 116 and a right storage portion 140 of the toolbox 120. This allows work to be performed on the auxiliary battery 116 or items to be removed from the right storage portion 140. Since the second opening/closing portion 130 can be opened and closed in this manner, maintenance tasks such as replacing the auxiliary battery 116 or checking its fluid levels can be performed without removing the entire luggage board 106.

Opening the third opening/closing portion 132 (see FIG. 4(a)) exposes a left storage portion 142 of the toolbox 120. In this manner, the stored items can be removed from the left storage portion 142.

The second opening/closing portion 130 (see FIG. 4(a)) and the third opening/closing portion 132 enable the use of a wider area of the toolbox 120 without removing the luggage board 106. Furthermore, the third opening/closing portion 132 enables the space between the rear member 104 and the rear wheelhouse (not shown) to be utilized as a luggage compartment.

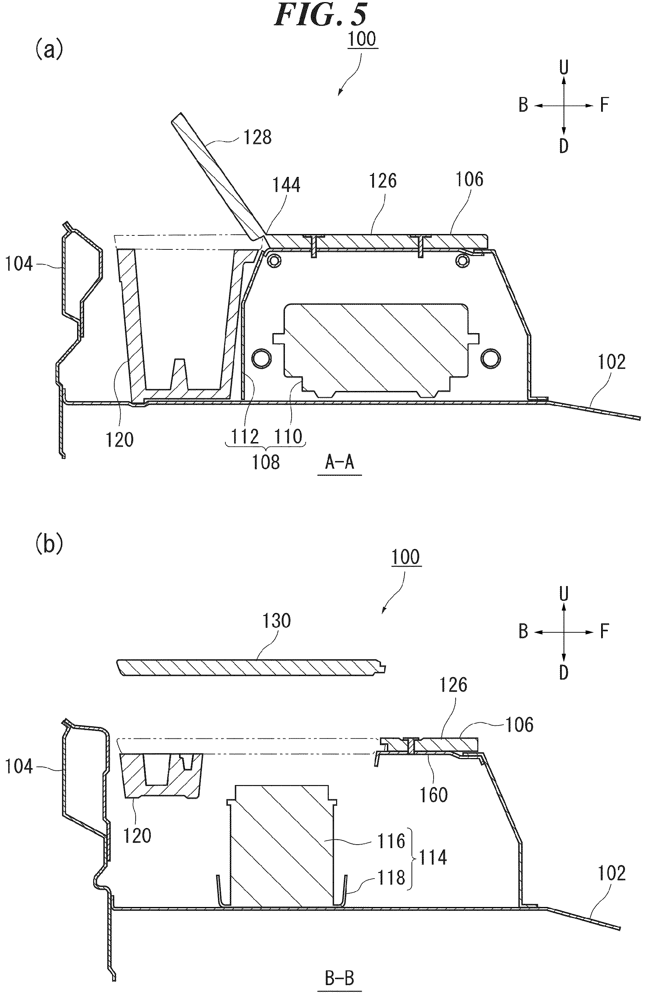

FIG. 5 is a cross-sectional view of the vehicle rear portion structure 100 in FIG. 3(a). FIG. 5(a) is a cross-sectional view of the vehicle rear portion structure 100 taken along line A-A in FIG. 3(a). FIG. 5(a) shows the first opening/closing portion 128 in the open state.

The fixed portion 126 is mounted on the battery frame 112. This allows the fixed portion 126 to be supported by the battery frame 112, enabling it to function as the floor of the luggage compartment taking advantage of the rigidity of the battery frame 112.

The luggage board 106 has a hinge portion 144. The hinge portion 144 connects the front end of the first opening/closing portion 128 to the fixed portion 126, making it possible to open and close the first opening/closing portion 128 by a rotating movement. Due to the hinge portion 144, the first opening/closing portion 128 can be opened and closed without being detached from the fixed portion 126.

The first opening/closing portion 128 is placed on the toolbox 120 in the closed state. This allows the first opening/closing portion 128 to be supported by the toolbox 120, so that the first opening/closing portion 128 can function as the floor of the luggage compartment while taking advantage of the rigidity of the toolbox 120.

FIG. 5(b) is a cross-sectional view of the vehicle rear portion structure 100 taken along line B-B in FIG. 3(a). FIG. 5(b) shows the second opening/closing portion 130 in the open state.

The fixed portion 126 is placed on the subframe 160 in front of the second opening/closing portion 130. By doing this, the fixed portion 126 is supported by the subframe 160 and can function as the floor of the luggage compartment by taking advantage of the rigidity of the subframe 160.

The second opening/closing portion 130 can be opened by being detached from the fixed portion 126. When performing work on the auxiliary battery assembly 114, the detachable design of the second opening/closing portion 130 improves work efficiency.

In the closed state, the rear end side of the second opening/closing portion 130 is placed on the toolbox 120. This allows the second opening/closing portion 130 to be supported by the toolbox 120, so that it can function as the floor of the luggage compartment while taking advantage of the rigidity of the toolbox 120.

As described above, the vehicle rear portion structure 100 provides the luggage compartment above the battery structure, such as the main battery assembly 108, and the toolbox 120, using the luggage board 106. Specifically, the luggage board 106 is provided with the first opening/closing portion 128 and the second opening/closing portion 130. Therefore, without unloading luggage outside the vehicle or removing the entire luggage board 106, by simply moving luggage to the fixed portion 126 and opening the first opening/closing portion 128 and the second opening/closing portion 130, the toolbox 120 can be used and work can be performed on the battery structure. Thus, with this vehicle rear portion structure 100, it is possible to provide a highly convenient luggage compartment.

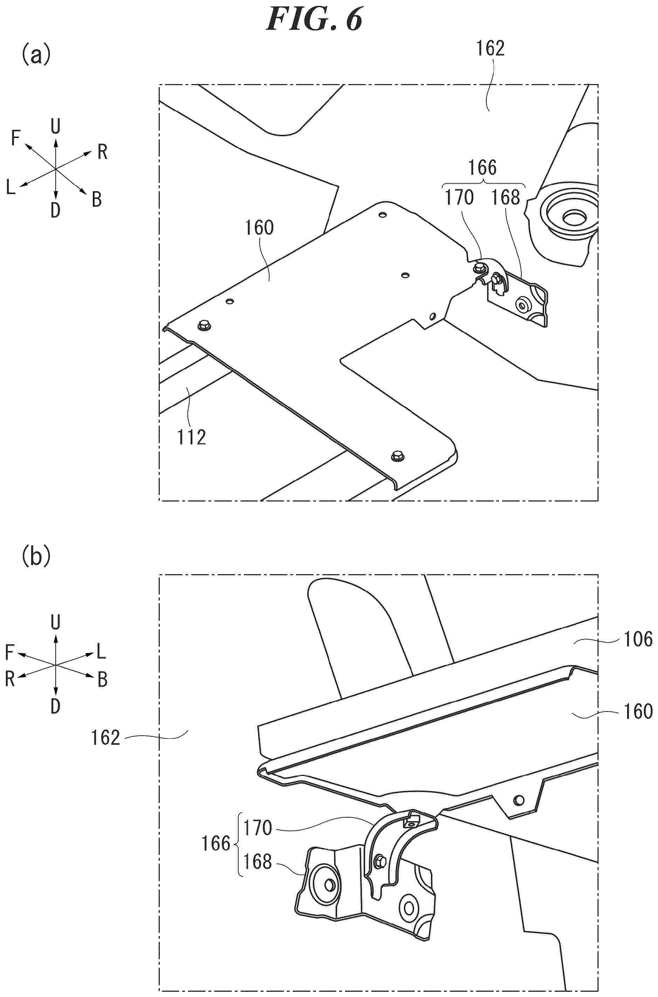

FIG. 6 is a diagram showing the subframe 160 in FIG. 3(b). FIG. 6(a) is a perspective view of the subframe 160 in FIG. 3(b) as viewed from the rear upper left.

The subframe 160 is a frame member added to the main battery frame 112. The subframe 160 extends between an end portion of an upper portion of the main battery frame 112 in the vehicle width direction and a sidewall 162 in the vicinity of this end portion in the vehicle. In the present example, the sidewall 162 is formed by a rear wheelhouse on the right side in the vehicle width direction.

FIG. 3(b) is referred to again. The subframe 160 has an L-shape when viewed from above. Specifically, the subframe 160 has a shape whose main battery frame 112 side extends in the front-rear direction, and then extends rightward in the vehicle width direction from the front portion thereof toward the sidewall 162.

A cooling unit 164 for cooling a predetermined device is provided below the subframe 160. The auxiliary battery assembly 114 is disposed at a position on the upper side of the rear floor 102, that is adjacent to the main battery frame 112 and the subframe 160 as viewed from above. In other words, the auxiliary battery 116 is disposed so as not to be covered by the subframe 160. In this manner, the entire auxiliary battery 116 is exposed when the second opening/closing portion 130 (see FIG. 3(a)) is opened, without being hidden by the subframe 160.

FIG. 6(b) is a perspective view of the subframe 160 in FIG. 3(b) as seen from the front lower left side. An end portion of the subframe 160 on the sidewall 162 side is supported by a bracket 166.

The bracket 166 is a member that connects the sidewall 162 and the subframe 160 of the vehicle. In the present example, the bracket 166 is joined to a lower surface of the subframe 160, but the bracket 166 may also be joined to an upper surface of the subframe 160.

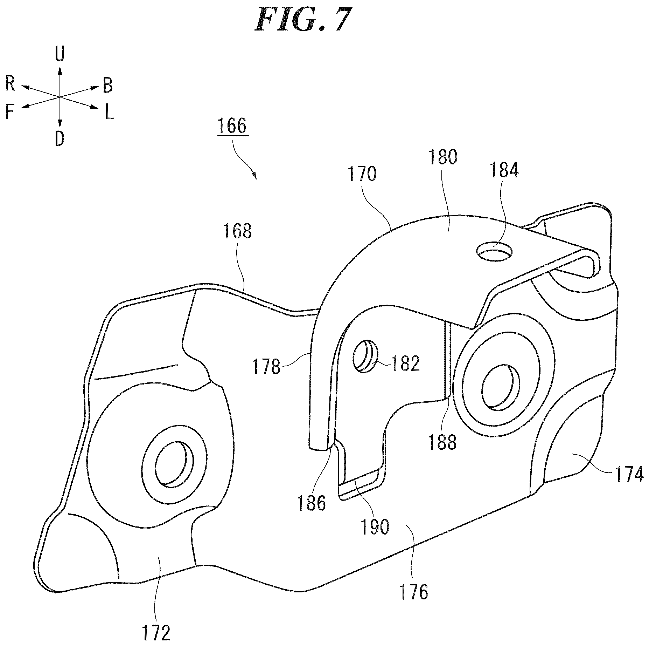

FIG. 7 is a perspective view showing the bracket 166 in FIG. 6(b) as seen from the left upper side. The bracket 166 includes a base bracket 168 joined to the sidewall 162 (see FIG. 6(b)) and a support bracket 170 coupled to the subframe 160.

The base bracket 168 has leg portions 172 and 174 at respective end portions in the front-rear direction. The leg portions 172 and 174 are in contact with the sidewall 162 (see FIG. 6(b)) and are joined to the sidewall 162 by spot welding or the other means.

A region between the leg portions 172 and 174 in the front-rear direction is a pedestal portion 176. The pedestal portion 176 is a portion to which the support bracket 170 is joined. The pedestal portion 176 bulges inward in the vehicle width direction relative to the leg portions 172 and 174, and is spaced apart from the sidewall 162 (see FIG. 6(b)).

The support bracket 170 has an L-shape whose upper portion 180 protrudes from an upper end of a side portion 178 toward the subframe 160 (see FIG. 6(b)) on the inner side in the vehicle width direction. The side portion 178 is provided with a through hole 182 and is fastened to the base bracket 168 by a predetermined fastener. In other words, the support bracket 170 can be attached to and detached from the base bracket 168 using the fastener.

The upper portion 180 is provided with a through hole 184 and fastened to the subframe 160 (see FIG. 6(b)) by a predetermined fastener.

Ribs 186 and 188 are formed at front and rear edges from the side portion 178 to the upper portion 180, respectively. The ribs 186 and 188 stand on the inner angle side of the L-shaped support bracket 170, thereby improving the rigidity of the support bracket 170.

A protruding portion 190 is provided at the lower end of the side portion 178. The protruding portion 190 is to be inserted into the base bracket 168. The protruding portion 190 can prevent rotation of the support bracket 170 when a fastener such as a bolt is used in the through hole 182.

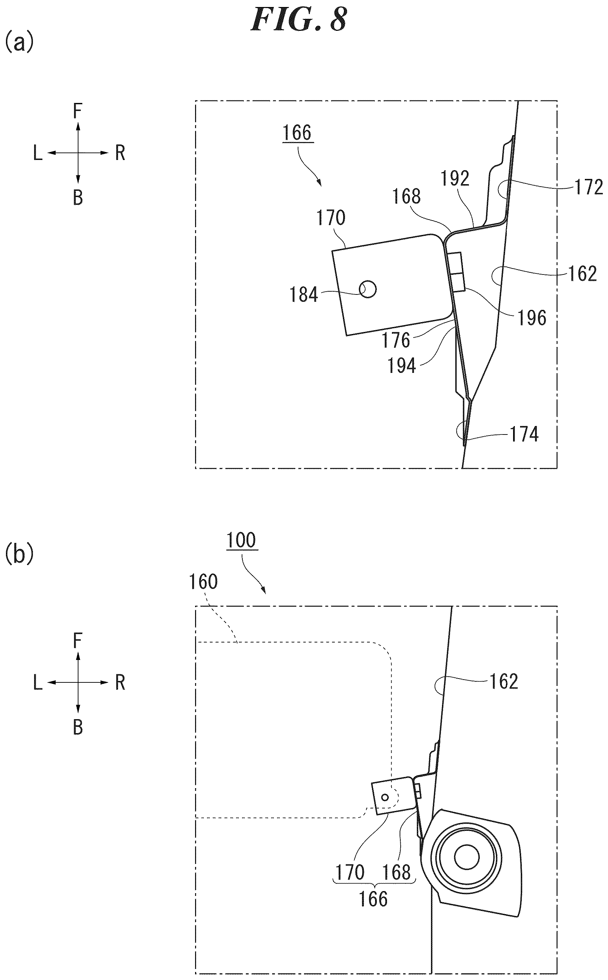

FIG. 8 is a view showing the bracket 166 in FIG. 7 from above. FIG. 8(a) is an enlarged view of the bracket 166 as seen from above.

As described above, the support bracket 170 is joined to the pedestal portion 176 of the base bracket 168 while being spaced apart from the sidewall 162. When viewed from above, the pedestal portion 176 has an L-shape as a whole in which a front wall portion 192 extends in the vehicle width direction and a sidewall portion 194 extends rearward and slightly toward the vehicle outer side. Since the pedestal portion 176 is spaced apart from the sidewall 162, a fastener 196 can be used for the pedestal portion 176.

Since the base bracket 168 has a three-dimensional shape in which the pedestal portion 176 is spaced from the sidewall 162 due to the front wall portion 192 and the sidewall portion 194, the secondary moment of area is increased and the base bracket 168 is more difficult to bend, thus improving the rigidity. In this case, the rigidity of the pedestal portion 176 against forces in the left-right direction and the front-rear direction can be adjusted by changing the dimension of the front wall portion 192 in the left-right direction and the dimension of the sidewall portion 194 in the front-rear direction.

As described above, the bracket 166 is configured to be divided into the base bracket 168 and the support bracket 170. Since the plate thickness and shape of the base bracket 168 and the support bracket 170 can be easily changed, the support rigidity of the subframe 160 can be efficiently improved. In addition, since the pedestal portion 176 of the base bracket 168 is separated from the sidewall 162, the work of joining the support bracket 170 to the pedestal portion 176 is facilitated, and measures for preventing rotation of the support bracket 170 are also facilitated, for example.

FIG. 8(b) is a diagram showing the bracket 166 and the subframe 160 in FIG. 8(a). In FIG. 8(b), the subframe 160 is shown in a see-through manner by a broken line.

In the present example, the luggage board 106 (see FIG. 3(a)) can be supported with a high rigidity by the main battery frame 112 and the subframe 160. In this manner, it is possible to provide a highly convenient luggage compartment in which luggage can be stably loaded.

Since the plate thickness and shape of the bracket 166 can be easily changed, the support rigidity of the subframe 160 can be efficiently improved as compared with the case where the subframe 160 is directly joined to the sidewall 162. In addition, since the position and shape of the bracket 166 can be changed in accordance with the surrounding structure, it is possible to facilitate the assembly work of the subframe 160 and the like to the vehicle.

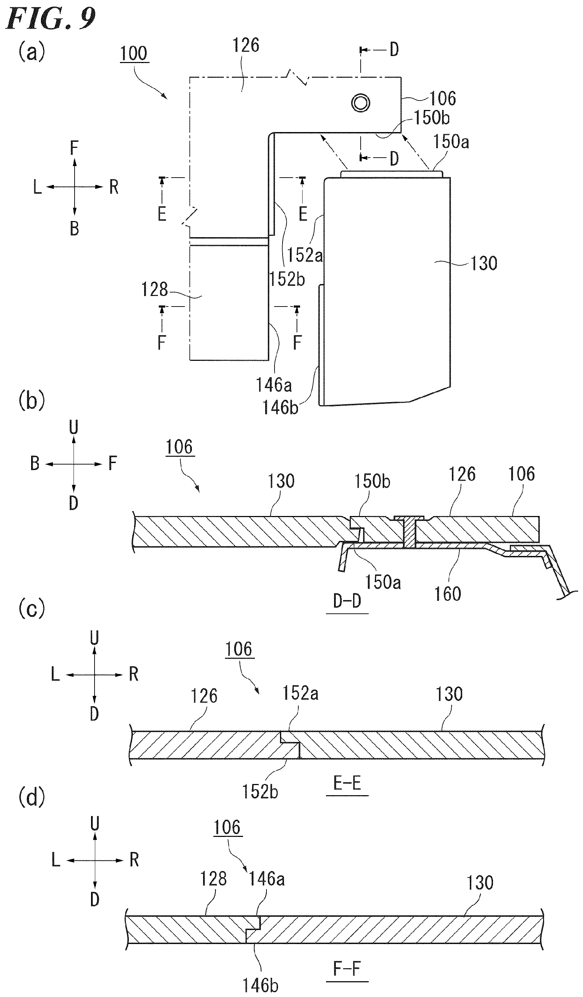

FIG. 9 shows the second opening/closing portion 130 in FIG. 4(a). FIG. 9(a) is an enlarged view of the second opening/closing portion 130 illustrated in FIG. 4(b). FIG. 9(a) shows the second opening/closing portion 130 in the open state.

The second opening/closing portion 130 is provided with fitting portions 150a and 152a that correspond to the fixed portion 126, in addition to the fitting portion 146b fitted to the first opening/closing portion 128. The fixed portion 126 is provided with corresponding fitting portions 150b and 152b.

FIG. 9(b) is a cross-sectional view of the fitting portion 150b of the fixed portion 126 of FIG. 9(a) taken along a line D-D. FIG. 9(b) shows the second opening/closing portion 130 in the closed state.

The fixed portion 126 is placed on the subframe 160 in front of the second opening/closing portion 130. In this manner, the fixed portion 126 is supported by the subframe 160 and can function as the floor of the luggage compartment taking advantage of the rigidity of the subframe 160.

The fitting portion 150a of the second opening/closing portion 130 has a shape in which the upper side is recessed and the lower side protrudes. The fitting portion 150b of the fixed portion 126 has a shape in which the upper side protrudes and the lower side is recessed.

The fitting portion 150a of the second opening/closing portion 130 can be fitted to the fitting portion 150b of the fixed portion 126 by being inserted obliquely from the upper rear side. At this time, the fitting portion 150a is fitted between the fitting portion 150b and the subframe 160. As a result, it is possible to improve the support rigidity of the second opening/closing portion 130 and prevent displacement.

It is also possible to improve the support rigidity of the second opening/closing portion 130 by increasing the amount of protrusion of the fitting portion 150a and the amount of recess of the corresponding fitting portion 150b.

FIG. 9(c) is a cross-sectional view of the fitting portion 152b of the fixed portion 126 of FIG. 9(a), taken along a line E-E. FIG. 9(c) also shows the second opening/closing portion 130 in the closed state.

The fitting portion 152a of the second opening/closing portion 130 has a shape in which the upper side protrudes and the lower side is recessed. The fitting portion 152b of the fixed portion 126 has a shape in which the upper side is recessed and the lower side protrudes.

The fitting portion 152a of the second opening/closing portion 130 can be fitted to the fitting portion 152b of the fixed portion 126 from above. That is, the second opening/closing portion 130 is configured such that the fitting portion 152a of the side portion is fitted to the fitting portion 152b of the fixed portion 126 from above by inserting the fitting portion 150a on the front side (see FIG. 9(b)) into the fitting portion 150b of the fixed portion 126 and fastening them to each other.

As described above, the fitting portions 150a and 152a of the second opening/closing portion 130 are fitted to the fitting portions 150b and 152b of the fixed portion 126 from below and above, respectively. In this manner, it is possible to prevent displacement of the second opening/closing portion 130 relative to the fixed portion 126 when the second opening/closing portion 130 is closed.

FIG. 9(d) is a cross-sectional view of a fitting portion 146a of the second opening/closing portion 128 taken along a line F-F in FIG. 9(a). The fitting portion 146a is provided at an end portion of the first opening/closing portion 128 on the second opening/closing portion 130 side.

The fitting portion 146a has a shape in which an upper side thereof protrudes and a lower side thereof is recessed. The second opening/closing portion 130 has a corresponding fitting portion 146b. The fitting portion 146b has a shape in which the upper side protrudes and the lower side is recessed.

The fitting portion 146a of the first opening/closing portion 128 is fitted to the fitting portion 146b of the second opening/closing portion 130 from above. Therefore, when the first opening/closing portion 128 is closed using the motion of the hinge portion 144 (see FIG. 5(a)), the fitting portion 146a is fitted to the fitting portion 146b, making it possible to prevent displacement of the second opening/closing portion 130.

While preferred examples of the present invention have been described with reference to the attached drawings, it goes without saying that the present invention is not limited to these examples. It is obvious that those skilled in the art will be able to arrive at various changes and modifications within the scope of the claims, and such changes and modifications are understood to naturally fall within the technical range of the present invention.

### [Industrial Applicability]

The present invention can be used in a vehicle rear portion structure.

### [Index to the Reference Numerals]

100 ... Vehicle rear portion structure; 102 ... Rear floor; 104 ... Rear member; 106 ... Luggage board; 108 ... Main battery assembly; 110 ... Main battery; 112 ... Main battery frame; 114 ... Auxiliary battery assembly; 116 ... Auxiliary battery; 118 ... Auxiliary battery tray; 120 ... Toolbox; 122 ... First partition wall; 124 ... Second partition wall; 126 ... Fixed portion; 128 ... First opening/closing portion; 130 ... Second opening/closing portion; 132 ... Third opening/closing portion; 134 ... Clip; 136 ... Attachment hole; 138 ... Central storage portion; 140 ... Right storage portion; 142 ... Left storage portion; 144 ... Hinge portion; 146a ... Fitting portion; 146b ... Fitting portion; 148a ... Fitting portion; 148b ... Fitting portion; 150a ... Fitting portion; 150b ... Fitting portion; 152a ... Fitting portion; 152b ... Fitting portion; 160 ... Subframe; 162 ... Sidewall; 164 ... Cooling unit; 166 ... Bracket; 168 ... Base bracket; 170 ... Support bracket; 172, 174 ... Leg portion; 176 ... Pedestal portion; 178 ... Side portion; 180 ... Upper portion; 182 ... Through hole; 184 ... Through hole; 186, 188 ... Rib; 190 ... Protrusion; 192 ... Front wall portion; 194 ... Sidewall portion; 196 ... Fastener

## Claims

1. A vehicle rear portion structure (100) comprising:
a rear floor (102) of a vehicle;
a main battery frame (112) disposed above the rear floor (102) and holding a main battery (110) that supplies power to a power unit of the vehicle;
a luggage board (106) that covers the main battery frame (112) from above and forms a floor of a luggage compartment of the vehicle; and
a subframe (160) extending between an end portion of an upper portion of the main battery frame (112) in a vehicle width direction and a sidewall (162) on the end portion side in the vehicle,
wherein the luggage board (106) includes a fixed portion (126) placed on and fixed to the main battery frame (112) and the subframe (160).

2. The vehicle rear portion structure (100) according to claim 1, further comprising a bracket (166) protruding from the sidewall (162) and joined to the subframe (160).

3. The vehicle rear portion structure (100) according to claim 2,
wherein the bracket (166) includes:
a base bracket (168) joined to the sidewall (162); and
a support bracket (170) protruding from the base bracket (168) toward the subframe (160), and
the base bracket (168) includes:
one or a plurality of leg portions (172, 174) joined to the sidewall (160); and
a pedestal portion (176) to which the support bracket (170) is joined in a state of being spaced apart from the sidewall (162).

4. The vehicle rear portion structure (100) according to claim 1, further comprising an auxiliary battery (116) disposed on an upper side of the rear floor (102) at a position adjacent to the main battery frame (112) and the subframe (160) when viewed from above,
wherein the luggage board (106) further includes:
an openable and closable opening/closing portion (128) provided in a region covering an upper side of the auxiliary battery (118); and
a fitting portion (146a, 146b) provided at an end portion of the opening/closing portion (128) and fitted between the fixed portion (126) and the subframe (160) in an attachable and detachable manner.

5. The vehicle rear portion structure (100) according to claim 4, further comprising:
a toolbox (120) disposed above the rear floor (102) and behind the main battery (110) and the auxiliary battery (116), the toolbox (120) being configured to store a predetermined item,
wherein the opening/closing portion (128) is placed on a portion of the toolbox (120) while covering the upper side of the auxiliary battery (116).

6. The vehicle rear portion structure (100) according to claim 5, wherein the luggage board (106) further includes:
another opening/closing portion (130) provided adjacent to the opening/closing portion (128) and covering an upper side of the toolbox (120) in an openable and closable manner; and
a hinge portion (144) that connects a front end of the other opening/closing portion (130) and the fixed portion (126).
